# EUROPÄISCHE PATENTSCHRIFT

(11) **EP 1 095 943 B1**
(45) Veröffentlichungstag und Bekanntmachung des Hinweises auf die Patenterteilung: **19.12.2001**
(21) Anmeldenummer: 00116287.4
(22) Anmeldetag: 10.08.2000
(51) Int. Cl.: C07F 7/16

(54) **Verfahren zur Herstellung von Methylchlorsilanen**
Preparation of methylchlorosilanes
Procédé de préparation d'organosilanes chloro-méthyl

(30) Priorität: 27.10.1999 DE 19951773
(43) Veröffentlichungstag der Anmeldung: 02.05.2001
(73) Patentinhaber: Wacker-Chemie GmbH, 81737 München (DE)
(72) Erfinder: Kalchauer, Wilfried, Dr., 84489 Burghausen (DE); Straussberger, Herbert, 84561 Mehring/Öd (DE); Streckel, Willibald, 84561 Mehring/Öd (DE); Gross, Jochen, 84561 Mehring/Öd (DE)
(74) Vertreter: Fritz, Helmut, Dr.

(56) Entgegenhaltungen:
- EP-A- 0 784 057
- EP-A- 0 900 802
- US-A- 4 328 353

## Beschreibung

Die Erfindung betrifft ein Verfahren zur Müller-Rochow-Direktsynthese bei dem abgetrennte staubförmige Bestandteile des Reaktionsgemischs mit flüssigem Chlormethan gekühlt werden.

Bei der Müller-Rochow-Direktsynthese wird Chlormethan mit Silicium in Gegenwart eines Kupferkatalysators und geeigneten Promotoren zu Methylchlorsilanen umgesetzt, wobei neben einer möglichst hohen Produktivität (Menge an gebildeten Silane pro Zeiteinheit und Reaktionsvolumen) und einer möglichst hohen Selektivität - bezogen auf das Zielprodukt Dimethyldichlorsilan - auch eine möglichst hohe Siliciumnutzung, verbunden mit einem sicheren und gleichzeitig flexiblen Betrieb der gesamten Anlage gefordert wird. Dimethyldichlorsilan wird beispielsweise für die Herstellung von linearen Polysiloxanen benötigt.

Die Direktsynthese kann diskontinuierlich oder kontinuierlich durchgeführt werden, in der industriellen Produktion wird die kontinuierliche Ausführungsform bevorzugt eingesetzt. Die kontinuierliche Direktsynthese wird in Wirbelschichtreaktoren durchgeführt, in denen Chlormethan gleichzeitig als Fluidisierungsmedium und Reaktant eingesetzt wird. Das benötigte Silicium wird zuvor zu einem Pulver mit einer Korngröße bis zu 700 µm vermahlen und mit Kupferkatalysatoren und Promotoren zur Kontaktmasse vermischt. Diese Kontaktmasse wird anschließend in den Wirbelschichtreaktor eingebracht und bei einer Temperatur im Bereich von 260 - 350°C zur Reaktion gebracht. Da die Reaktion exotherm ist, muß die freiwerdende Reaktionswärme über ein Kühlsystem abgeführt werden.

Nicht umgesetztes Chlormethan, die gasförmigen Methylchlorsilane, Katalysatorbestandteile und feinteilige Stäube verlassen den Reaktor. Über einen oder mehrere Zyklone (Hauptzyklone) kann der gröbere Teil der mitgerissenen Partikel vom Gasstrom abgetrennt und wahlweise - gegebenenfalls über zwischengeschaltete Sammelbehälter - wieder in den Reaktor zurückgeführt oder über Staubsammelbehälter aus dem System ausgeschleust werden.
Die feinstkörnigen, mitgerissenen Partikel müssen ebenfalls vom Gasstrom abgetrennt werden. Dies kann beispielsweise durch eine Gasfiltration und/oder einem oder mehreren nachfolgenden Zyklonen bzw. Nachzyklonen erfolgen. Durch dieses Vorgehen kann eine hohe Siliciumnutzung sichergestellt werden.
In US-A-4281149, Fig. 1 ist beispielsweise ein derartiges System, bestehend aus Reaktor, Hauptzyklon mit Rückführung, Nachzyklon mit Staubsammelbehälter dargestellt.
Das Rohsilan wird anschließend von nicht umgesetzten Chlormethan abgetrennt und einer Destillation zugeführt. Gereinigtes, nicht umgesetztes Chlormethan kann wieder in den Reaktor eingespeist werden.

Die gesammelten Stäube müssen - zumindest teilweise - aus dem Reaktionsystem ausgeschleust werden, da verschiedene Nebenelemente und Schlackenanteile, die mit dem Silicium eingebracht werden, in diesem Produktstrom angereichert sind, und im Falle einer vollständigen Rückführung in den Reaktor, durch katalytische Effekte dieser Verunreinigungen, die Selektivität stark verringert werden würde. Ebenso müssen die feinteiligen, nicht reaktiven Bestandteile, die mit dem Silicium eingebracht werden wie beispielsweise Schlacken und Eisendisilicide aus dem System ausgeschleust werden um eine möglichst höhe Produktivität zu erreichen.
Würde man die feinsten Stäube wieder vollständig in den Reaktor zurückführen, so würden diese Stäube wieder sehr rasch ausgetragen werden, und somit das Gasreinigungssystem unnötig belasten, die Selektivität und die Reaktivität würden auf Grund katalytischer Effekte sinken und die Reaktorlaufzeit müßte reduziert werden.

Dies ist in "Silicon for the Chemical Industry II; Loen - Norwegen 8-10 June 1994; Seite 235-239; From Waste to Valuable Products: Work up of Silicon Metal Byproducts from the Direct Process; B. Pachaly, H. Straußberger, W. Streckel" beschrieben. Die Stäube bestehen haupsächlich aus feinen Siliciumkörnern, abreagierten Siliciumkörnern, Schlacketeilchen, unreaktiven Siliciden, Katalysator und Promotor Bestandteilen und weisen beim Abscheiden eine Temperatur auf, die in etwa der Temperatur des Reaktorinhalts entspricht. Auf Grund der großen spezifischen Oberfläche, der Anwesenheit der, für die Direktsynthese erforderlichen Katalysatoren und Promotoren und von freien, d.h. nicht mit einer schützenden SiO₂-Schicht bedeckten Oberfläche sind diese Stäube sehr reaktiv. d.h. die Stäube können beispielsweise mit dem vorhandenen Chlormethan weiter reagieren und sich unkontrolliert aufheizen. In "The Chemistry of Organic Silicon Compounds; Volume 2, Part 2, Chapter 26, Seite 1581 - 1597; Recent advances in the direct process" wird dargelegt, daß die stark exotherme Direktsynthese an, unter Sauerstoffausschluß, frisch gemahlenem Silicium in Gegenwart der entsprechenden Katalysatoren ab 147°C beginnt.

Ebenso kann die exotherme Reaktion von Kupferverbindungen mit metallischem Silicium ab Temperaturen von ca. 150°C zu einer unkontrollierten Erwärmung führen.

In US-A-4 328 353 ist ein Verfahren zur Abtrennung von Feststoffen von den gasförmigen Reaktionsprodukten aus der Direktsynthese beschrieben. Die Abtrennung erfolgt mittels gesinterten metallischen Filtern, wobei die Abreinigung der Filter mittels gasförmigem Chlormethan erfolgen kann.

Aufgabe der vorliegenden Erfindung war es, ein Verfahren bereitzustellen, bei dem die vorstehenden Probleme bei der Handhabung der Stäube vermieden werden.

Gegenstand der Erfindung ist ein Verfahren zur Direktsynthese von Methylchlorsilanen aus Chlormethan und Silicium in Gegenwart eines Kupferkatalysators und Promotor, bei dem kontinuierlich Reaktionsgemisch abgeführt wird, das Chlormethan, Methylchlorsilane und als staubförmige Bestandteile Kupfer, Promotor und Silicium umfasst, bei dem die staubförmigen Bestandteile aus dem gasförmigen Reaktionsgemisch abgetrennt werden, wobei die abgetrennten staubförmigen Bestandteile mit flüssigem Chlormethan gekühlt werden.

Das Verfahren wird vorzugsweise kontinuierlich durchgeführt. Üblicherweise laufen Reaktionen mit einem bei Raumtemperatur gasförmigen Stoff erheblich schneller ab, wenn dieser Reaktionspartner verflüssigt vorliegt. So kann beispielsweise flüssiger Sauerstoff explosionsartig mit organischen Substanzen reagieren. Es wurde nun gefunden, daß durch die Zugabe von flüssigem Chlormethan zu den staubförmigen Bestandteilen des Reaktionsgemischs deren Reaktivität durch Absenken der Temperatur erheblich verringert wird.

Da Chlormethan ein Bestandteil der Reaktionsmischung ist, wird deren Aufarbeitung, insbesondere der Methylchlorsilane nicht erschwert. Chlormethan hat bei Umgebungsdruck, also bei 1013 mbar, einen Siedepunkt von -23°C. Durch Druckerhöhung kann der Siedepunkt entsprechend angehoben werden, beispielsweise beträgt der Siedepunkt bei 2400 mbar ca. 0°C. In einer bevorzugten Ausführungsform kommt Chlormethan mit einem Druck im Bereich von 2 bis 7 bar und einer Temperatur im Bereich von -6°C bis 31°C zum Einsatz, weil dies den geringsten apparativen Aufwand erfordert.

Wird nun flüssiges Chlormethan zu den abgetrennten heissen staubförmigen Bestandteilen gegeben, so verdampft das Chlormethan und der Staub wird abgekühlt, ohne daß es zu einer massiven exothermen Reaktion des Staubes mit dem Chlormethan kommt.

In einer bevorzugten Ausführungsform werden die staubförmigen Bestandteile mit Hilfe von einem oder mehreren Zyklonen abgetrennt. Die Chlormethan-Zugabe erfolgt vorzugsweise derart, dass der Zyklonstaub auf eine Temperatur im Bereich von 20°C bis 250°C gekühlt wird. Besonders bevorzugt ist ein Temperaturbereich von 75°C bis 145°C, da dadurch sichergestellt ist, daß einerseits die exothermen Reaktionen von Silicum mit Chlormethan und von Silicium mit Kupferverbindungen weitgehend unterbunden werden und andererseits die produzierten Methylchlorsilane noch nicht im nennenswertem Ausmaß kondensieren, - dies würde die Förderung des Zyklonstaubes erschweren.

Durch die Zugabe des flüssigen Chlormethans wird eine effektive Kühlung des Zyklonstaubs sichergestellt, da im Gegensatz zu einer Behälterwand-Kühlung oder einer Kühlung mittels innenliegender Kühlschlangen, die Kühlung direkt im Inneren des Behälters erfolgt und keine Wärmeübertragung durch verschiedene Werkstoffe erforderlich ist.

Ein Kühlen von nicht oder nur wenig bewegten Stäuben in Staubsammelbehältern durch Kühlen der entsprechenden Behälterwand bzw. durch innenliegende Kühlschlangen ist im Gegensatz dazu wenig effektiv.

Die Wirkungsweise eines Zyklons ist derart, daß das staubförmige Bestandteile aufweisende Reaktionsgemisch tangential dem Zyklon zugeführt wird, wobei sich eine Rotationsbewegung ausbildet. Da die Dichte der Staubteilchen gegenüber der Gasdichte groß ist, werden die Staubteilchen durch die Zentrifugalbeschleunigung nach aussen geschleudert.

Sie kreisen an der Zylinderwandung des Zyklons entlang zur Kegelspitze, die sich am unteren Teil befindet, und werden dort ausgetragen. Das entstaubte Gas verläßt den Zyklon durch ein zentrales Tauchrohr.

Vorzugsweise wird an der Kegelspitze des Zyklons oder falls vorhanden, im Übergangsstück zwischen Zyklon und Staubsammelbehälter oder im Sammelbehälter das Chlormethan zugegeben. Dadurch kann man in Abhängigkeit von der Gasmenge die Abscheidecharakteristik des Zyklons gezielt verändern. Es kann erreicht werden, dass durch den gasförmigen Störstrom im unteren Bereich und/oder unterhalb des Zyklons bereits abgeschiedene feinste. Staubpartikel wieder über das zentrale Tauchrohr mit dem Gasstrom ausgetragen werden. Dies ist besonders bei den Hauptzyklonen mit einer Staubrückführung in den Reaktor von Relevanz, da dadurch verhindert wird, daß feinste Partikel wieder in den Reaktor zurückgeführt werden, die dann sofort wieder ausgetragen werden würden.

Vorzugsweise ist nach der Kegelspitze des Zyklons ein Sammelbehälter angeordnet. Insbesondere wird Chlormethan im Sammelbehälter zugegeben.

Vorzugsweise wird das Reaktionsgemisch zuerst durch Hauptzyklonen und das teilweise von Staubpartikeln befreite Gas in weitere Zyklonen geführt.

Die Zugabe von Chlormethan kann an einer oder mehreren Stellen erfolgen. Die Zugabe von Chlormethan erfolgt vorzugsweise über Düsen.

Über das zentrale Zyklontauchrohr verläßt das Chlormethan gemeinsam mit dem chlormethanhaltigen Rohsilan den Zyklon.

Die Menge an zugegebenem Chlormethan richtet sich beispielsweise nach anlagentechnischen Vorgaben wie Druckbeständigkeit und Temperatubeständigkeit der Anlagenteile, nach der gewünschten Zyklon-Abscheidecharakteristik, Druck und Temperatur des flüssigen Chlormethans, Temperatur und Menge des abgeschiedenen Zyklonstaubes und der gewünschte Zyklonstaubtemperatur.

Je nach dem, welcher Vorteil der vorliegenden Erfindung genutzt werden möchte, kann während des Betriebes der Direktsynthese die Chlormethan-Zugabe laufend oder auch nur phasenweise erfolgen.

### Beispiele

Ein großtechnischer Wirbelschichtreaktor mit kontinuierlicher Kontaktmassenbeschickung, Hauptzyklon mit Staubrückführung und Nachzyklon mit Staubausschleusung über Staubsammelbehälter und einer Vorrichtung zur flüssigen Chlormethan-Eindüsung wird unter vergleichbaren Bedingungen (Staubmenge, Gasgeschwindigkeit, Temperatur, Staubzusammensetzung, ...) mit einer Si/CuO/ZnCl₂/Sn Kontaktmasse betrieben.

### 1. Nicht erfindungsgemäß - ohne Chlormethan Kühlung

Über die Vorrichtung zur flüssigen Methylchlorid-Eindüsung wird kein Chlormethan in das System eingebracht. Die Temperatur im Staubsammelbehälter steigt unkontrolliert auf über 450°C, die nachfolgenden Anlagenteile zur Staubförderung wie z.B. Kugelhähne können auf Grund der hohen Temperatur nicht mehr problemlos betrieben werden.

### 2. Erfindungsgemäß

Über die Vorrichtung zur flüssigen Chlormethan-Eindüsung wurde füssiges Chlormethan (2,4 bar) in den Staubsammelbehälter eingedüst. Die Menge an Chlormethan richtete sich nach der aktuellen Staubmenge und der Staubtemperatur und lag zwischen 10 und 250 l/h. Durch dieses Vorgehen konnte die Staubtemperatur konstant in Bereich zwischen 75 und 240°C gehalten werden. Es traten keine Probleme bei den nachgeschalteten Staubfördereinheiten auf, der in den Sammelbehältern anfallende Zyklonstaub enthielt wenigen Feinstanteile.

## Patentansprüche

1. Verfahren zur Direktsynthese von Methylchlorsilanen aus Chlormethan und Silicium in Gegenwart eines Kupferkatalysators und Promotor, bei dem kontinuierlich Reaktionsgemisch abgeführt wird, das Chlormethan, Methylchlorsilane und als staubförmige Bestandteile Kupfer, Promotor und Silicium umfasst, bei dem die staubförmigen Bestandteile aus dem gasförmigen Reaktionsgemisch abgetrennt werden, wobei die abgetrennten staubförmigen Bestandteile mit flüssigem Chlormethan gekühlt werden.

2. Verfahren nach Anspruch 1, bei dem die staubförmigen Bestandteile mit Hilfe von Zyklon(en) abgetrennt werden.

3. Verfahren nach Anspruch 1 oder 2, wobei Chlormethan mit einem Druck im Bereich von 2 bis 7 bar und einer Temperatur im Bereich von -6°C bis 31°C eingesetzt wird.

4. Verfahren nach Anspruch 1 bis 3, bei dem die Chlormethan-Zugabe derart erfolgt, dass die staubförmigen Bestandteile auf eine Temperatur im Bereich von 20°C bis 250°C gekühlt werden.

5. Verfahren nach Anspruch 2 bis 4, bei dem an der Kegelspitze des Zyklons oder falls vorhanden, im Übergangsstück zwischen Zyklon und Staubsammelbehälter oder im Sammelbehälter das Chlormethan zugegeben wird.

6. Verfahren nach Anspruch 1 bis 5, welches kontinuierlich durchgeführt wird.

## Claims

1. Process for the direct synthesis of methylchlorosilanes from chloromethane and silicon in the presence of a copper catalyst and promoter, in which reaction mixture which comprises chloromethane, methanechlorosilanes and, as dust-like components, copper, promoter and silicon is removed continuously and in which the dust-like components are separated from the gaseous reaction mixture, the dust-like components separated off being cooled with liquid chloromethane.

2. Process according to Claim 1, in which the dust-like components are separated off with the aid of cyclone(s).

3. Process according to Claim 1 or 2, chloromethane being used at a pressure in the range from 2 to 7 bar and a temperature in the range from -6°C to 31°C.

4. Process according to any of Claims 1 to 3, in which the chloromethane is added in such a way that the dust-like components are cooled to a temperature in the range from 20°C to 250°C.

5. Process according to any of Claims 2 to 4, in which the chloromethane is added at the apex of the cyclone cone or, if present, in the transition section between cyclone and dust collecting container or in the collecting container.

6. Process according to any of Claims 1 to 5, which is carried out continuously.

## Revendications

1. Procédé de synthèse directe de méthylchlorosilanes à partir de chlorométhane et de silicium en présence d'un catalyseur au cuivre et d'un agent promoteur, lors duquel l'on évacue en continu un mélange réactionnel, qui comprend du chlorométhane, des méthylchlorosilanes, et, en tant que constituants pulvérulents, du cuivre, un agent promoteur et du silicium, lors duquel les constituants pulvérulents sont séparés du mélange réactionnel gazeux, les constituants pulvérulents séparés étant refroidis à l'aide de chlorométhane liquide.

2. Procédé selon la revendication 1, lors duquel les constituants pulvérulents sont séparés à l'aide d'un ou de cyclone(s).

3. Procédé selon la revendication 1 ou 2, le chlorométhane étant utilisé à une pression dans le domaine de 2 à 7 bars et à une température dans le domaine de -6°C à 31°C.

4. Procédé selon les revendications 1 à 3, lors duquel l'addition du chlorométhane se fait de telle sorte que les constituants pulvérulents sont refroidis à une température dans le domaine de 20°C à 250°C.

5. Procédé selon les revendications 2 à 4, lors duquel l'on ajoute le chlorométhane à la pointe de cône du cyclone ou, s'il existe, dans la pièce de transition entre le cyclone et le récipient de collecte des poussières ou dans le récipient de collecte des poussières.

6. Procédé selon les revendications 1 à 5, qui est effectué en continu.
